# EUROPEAN PATENT APPLICATION

(11) **EP 4 776 397 A1**
(43) Date of publication of application: **15.07.2026**
(21) Application number: 26153912.6
(22) Date of filing: 23.01.2026
(51) Int. Cl.: H01M 50/198, H01M 50/105, H01M 50/186, H01M 50/178, H01M 50/184, H01M 50/557

(54) **ELECTROCHEMICAL DEVICE AND ELECTRONIC DEVICE**

(30) Priority: 24.01.2025 CN 202510116208
(71) Applicant: Ningde Amperex Technology Limited, Ningde, Fujian 352100 (CN)
(72) Inventor: WU, Biao, Ningde, 352100 (CN)
(74) Representative: Dehns Germany Partnerschaft mbB

(57) **Abstract**

An electrochemical device and an electronic device. A packaging bag of the electrochemical device includes a main portion and a top seal portion connected together. A sealed region of the top seal portion includes an edge point Q2 close to an edge of the cell assembly and located on a first wall. The top seal portion includes the first wall extending along a first direction. A second wall of the main portion is connected to the first wall and a third wall. A connection point Q3 is formed at a junction between the second wall and the third wall. An angle R between the first wall and a straight line K1 satisfies: 80° ≤ R ≤ 110°; and/or along the first direction, a distance h between the edge point Q2 and the connection point Q3 satisfies: 0 mm ≤ h ≤ 1 mm.

## Description

### TECHNICAL FIELD

This application relates to the technical field of batteries, and in particular, to an electrochemical device and an electronic device.

### BACKGROUND

Pouch-type lithium-ion batteries are widely used in electronic devices due to advantages such as a small size, a light weight, and a high energy density. Extremely high performance of pouch-type lithium-ion batteries is pursued, but safety and reliability of the batteries are also of vital importance. Under conditions such as severe impact, high-temperature environments, or in-battery abnormalities, problems such as thermal runaway of the lithium-ion battery may occur. Therefore, how to safely and reliably solve the thermal runaway of pouch-type lithium-ion batteries is an important research topic in the technical field of electrochemical devices.

### SUMMARY

Some embodiments of this application provide an electrochemical device and an electronic device to solve the problem of thermal runaway of an electrochemical device and improve safety performance.

To solve the above technical problem, a technical solution put forward in an embodiment of this application is to provide an electrochemical device, including a packaging bag, a cell assembly, and a tab assembly. The packaging bag includes a main portion and a top seal portion connected in a first direction. The main portion is provided with an accommodation cavity. The cell assembly is disposed in the accommodation cavity. The tab assembly is electrically connected to the cell assembly. The tab assembly is connected to the top seal portion. The top seal portion is provided with a sealed region. Along a direction from the top seal portion toward the main portion, the sealed region includes an edge point close to an edge of the cell assembly and located on the first wall. The top seal portion includes a first wall extending along a first direction. The main portion includes a second wall and a third wall connected to each other. The second wall is connected to the first wall and the third wall. The third wall extends along the first direction. A connection point is formed at a junction between the second wall and the third wall. A straight line is formed by passing through the edge point and the connection point, and an angle R between the first wall and the straight line satisfies: 80° ≤ R ≤ 110°; and/or, along the first direction, a distance h between the edge point and the connection point satisfies: 0 mm ≤ h ≤ 1 mm.

The electrochemical device in this embodiment of this application reshapes the first wall and the second wall of the packaging bag to connect the first wall and the second wall as perpendicularly as possible. Furthermore, the distance h in the first direction from the edge point (located on the first wall) of the sealed region to the connection point formed at the junction between the second wall and the third wall is controlled to fall within the above range, thereby reducing the variable space of the accommodation cavity after completion of sealing of the electrochemical device. Therefore, the gas inside the accommodation cavity generates a relatively high pressure during thermal runaway. Consequently, the top seal portion is subjected to a greater force in the thickness direction thereof, making it easier to burst open the top seal portion to achieve pressure relief.

In some embodiments, the angle R satisfies: 85° ≤ R ≤ 100°; and/or the distance h satisfies: 0.2 mm ≤ h ≤ 0.5 mm. The closer the angle R between the first wall and the second wall is to 90°, the smaller the spatial variation of the accommodation cavity, and the easier it is to burst open the top seal portion in the case of thermal runaway.

In some embodiments, the sealed region includes a first sealed region and a second sealed region, and the second sealed region is located between the first sealed region and the main portion. Along the first direction X, that is, along a direction from the top seal portion toward the main portion, the first sealed region and the second sealed region are contiguous or spaced apart. The second sealed region includes an edge point close to the edge of the cell assembly and located on the first wall. When the electrochemical device is in normal use, the second sealed region increases the binding force of the top seal portion in the thickness direction thereof, thereby improving the safety performance. When the electrochemical device is thermally runaway, the gas in the accommodation cavity expands, and the gas pressure increases. The stress point of the top seal portion is located in the second sealed region. Furthermore, a peak stress point of the top seal portion is located at the edge point of the second sealed region. With the rise of the temperature of thermal runaway, the sealing effect of the second sealed region decreases, allowing the gas to burst open the second sealed region and the first sealed region to release pressure.

In some embodiments, along a thickness direction of the top seal portion, the top seal portion includes a first layer, a second layer, and an adhesive layer located between the first layer and the second layer. The adhesive layer includes a first part and a second part. The first part is located in the first sealed region. The second part is located in the second sealed region. Along the thickness direction of the top seal portion, a thickness H1 of the first part and a thickness H2 of the second part satisfy: 0.8 ≤ H1/H2 ≤ 1.2. In an embodiment of this application, the adhesive layer in the second sealed region is subjected to pressure-assisted heat sealing by means of an auxiliary backing block or an auxiliary heat-sealing head, thereby reducing the thickness of an overflowed adhesive lump and making the thickness of the adhesive layer more uniform. As a result, the angle between the first wall of the top seal portion and the second wall of the main portion is made closer to a right angle.

In some embodiments, at an edge point close to the edge of the cell assembly in the second sealed region and located on the first wall, a tensile sealing force F1 at a normal temperature of 22 °C to 27 °C ranges from 3 N/mm to 10 N/mm, and a tensile sealing force F2 at a high temperature of 125 °C to 135 °C ranges from 0.01 N/mm to 0.3 N/mm. This configuration ensures that the second sealed region exhibits a relatively high adhesive binding force at normal temperature, and makes the top seal exert a good sealing effect. In the case of thermal runaway, the adhesive binding force of the second sealed region becomes weak, thereby making it convenient for the gas inside the accommodation cavity to burst the second sealed region to achieve rapid pressure relief.

In some embodiments, the tab assembly includes a tab, an insulator, and a sealing element. The tab is electrically connected to the cell assembly. The insulator covers a connection region between the tab and the cell assembly. The sealing element is disposed between the tab and the top seal portion. With the insulator covering the connection region between the tab and the cell assembly, the burrs on the connection region are covered, thereby reducing the probability that the burrs pierce the cell assembly and causes a short circuit of the cell assembly. With the sealing element disposed between the tab and the top seal portion, the sealing element wraps a part of the tab, thereby improving the hermeticity of the tab at the top seal portion.

In some embodiments, along a direction from the main portion toward the top seal portion, the insulator and the adhesive layer are spaced apart. This configuration reduces the impact of heat on the shape of the insulator during the pressure-assisted heating of the adhesive layer, reduces the risk of deformation and shrinkage of the insulator, and makes the material selection for the adhesive layer independent of the material selection for the insulator, thereby widening the range of materials available for the adhesive layer and the insulator.

In some embodiments, along the direction from the main portion toward the top seal portion, the insulator and the adhesive layer are fused into a single integral piece. With the structure in which the insulator and the adhesive layer are fused into a single integral piece, on the one hand, the requirements on the sealing precision are lowered, and the production efficiency is improved. On the other hand, after completion of sealing, the adhesive layer exerts a tensile force on the insulator, thereby reducing the risk of internal short circuits in the cell assembly due to shrinkage of the insulator. This structure also reduces the wobbling amplitude of the cell assembly within the accommodation cavity, and improves the internal stability of the electrochemical device.

In some embodiments, a melting point M1 of the insulator satisfies: 150 °C ≤ M1 ≤ 270 °C, and a melting point M2 of the adhesive layer satisfies: 50 °C ≤ M2 ≤ 400 °C. By setting the melting points of the insulator and the adhesive layer to fall within the above ranges, this application enables the insulator and the adhesive layer to fuse into a single integral structure during heat sealing on the one hand. On the other hand, this setting makes both the insulator and the adhesive layer resistant to high temperature to some extent after completion of sealing, thereby ensuring stability of the electrochemical device under normal operating conditions. In some embodiments, a melting point M1 of the insulator satisfies: 150 °C ≤ M1 ≤ 220 °C, and a melting point M2 of the adhesive layer satisfies: 50 °C ≤ M2 ≤ 160 °C.

In some embodiments, the packaging bag further includes a side seal portion. The side seal portion is connected to the main portion. The side seal portion is provided with a third sealed region and a fourth sealed region. The fourth sealed region is located between the third sealed region and the main portion. By adding a fourth sealed region between the third sealed region and the main portion, this application further increases the sealing area of the side seal portion, and makes the sealed region on the side seal portion closer to the main portion, thereby reducing the variable space of the accommodation cavity, increasing the gas pressure inside the accommodation cavity in the case of thermal runaway, and making it easier to burst open the top seal portion to release pressure.

In some embodiments, along a direction from the main portion toward the top seal portion, a length of the first sealed region ranges from 1 mm to 2.5 mm; and/or, along a direction from the main portion toward the top seal portion, a length of the second sealed region ranges from 0.01 mm to 0.5 mm.

To solve the above technical problems, another technical solution put forward in an embodiment of this application is to provide an electronic device. The electronic device includes the electrochemical device.

Beneficial effects of some embodiments of this application are as follows: The electrochemical device in an embodiment of this application includes a packaging bag, a cell assembly, and a tab assembly. The packaging bag includes a main portion and a top seal portion connected in a first direction. The main portion is provided with an accommodation cavity. A cell assembly and a tab assembly, where the cell assembly is disposed in the accommodation cavity. The tab assembly is electrically connected to the cell assembly. The tab assembly is connected to the top seal portion. The top seal portion is provided with a sealed region. Along a direction from the top seal portion toward the main portion, the sealed region includes an edge point Q2 close to the edge of the cell assembly and located on the first wall. The top seal portion includes a first wall extending along a first direction. The main portion includes a second wall and a third wall connected to each other. The second wall is connected to the first wall and the third wall. The third wall extends along the first direction. A connection point is formed at a junction between the second wall and the third wall. A straight line is formed by passing through the edge point and the connection point, and an angle R between the first wall and the straight line satisfies: 80° ≤ R ≤ 110°; and/or, along the first direction, a distance h between the edge point and the connection point satisfies: 0 mm ≤ h ≤ 1 mm.

The electrochemical device in this embodiment of this application reshapes the first wall and the second wall of the packaging bag to connect the first wall and the second wall as perpendicularly as possible. Furthermore, the distance h in the first direction from the edge point of the sealed region to the connection point formed at the junction between the second wall and the third wall is controlled to fall within the above range, thereby reducing the variable space of the accommodation cavity after completion of sealing of the electrochemical device. Therefore, the gas inside the accommodation cavity generates a relatively high pressure during thermal runaway. Consequently, the top seal portion is subjected to a greater force in the thickness direction thereof, making it easier to burst open the top seal portion to achieve pressure relief.

### BRIEF DESCRIPTION OF DRAWINGS

To describe the technical solutions of specific embodiments of this application more clearly, the following outlines the drawings to be used in the description of specific embodiments of this application. In all the drawings, similar elements or parts are generally identified by similar reference numerals. The elements or parts in the drawings are not necessarily drawn to scale.
FIG. 1 is a partial cross-sectional view of a lithium-ion battery in the prior art;
FIG. 2 is a cross-sectional view of an electrochemical device according to an embodiment of this application;
FIG. 3 is a partial cross-sectional view of an electrochemical device sectioned along an A-A line shown in FIG. 2 according to an embodiment of this application;
FIG. 4 is a partial cross-sectional view of an electrochemical device sectioned along a B-B line shown in FIG. 2 according to an embodiment of this application; and
FIG. 5 is a partial cross-sectional view of an electrochemical device sectioned along a B-B line shown in FIG. 2 according to another embodiment of this application.

List of reference signs:
100. electrochemical device; 10. packaging bag; 11. main portion; 111. accommodation cavity; 112. second wall; 113. third wall; 12. top seal portion; 121. first sealed region; 122. second sealed region; 123. first wall; 124. first layer; 125. second layer; 126. adhesive layer; 1261. first part; 1262. second part; 127. overflowed adhesive lump; 13. side seal portion; 131. third sealed region; 132. fourth sealed region; 20. cell assembly; 21. electrode plate; 30. tab assembly; 31. tab; 32. insulator; 33. sealing element; 200. heat-sealing head; 300. auxiliary heat-sealing head (auxiliary backing block).

### DETAILED DESCRIPTION

For ease of understanding this application, the following describes this application in more detail with reference to drawings and specific embodiments. It is hereby noted that an element referred to herein as being "fixed to" another element may be directly disposed on the other element, or may be fixed to the other element with one or more elements in between. An element referred to herein as "connected to" another element may be connected to the other element directly or with one or more elements in between. A direction or a positional relationship indicated by the terms such as "up", "down", "in", "out", "vertical", and "horizontal" used herein is a direction or positional relationship based on the illustration in the drawings, and is merely intended for ease or brevity of describing this application, but does not indicate or imply that the indicated device or component is necessarily located in the specified direction or constructed or operated in the specified direction. Therefore, such terms are not construed as a limitation on this application. In addition, the terms such as "first" and "second" are merely used for descriptive purposes, but not intended to indicate or imply relative importance.

Unless otherwise defined, all technical and scientific terms used herein bear the same meanings as what is normally understood by a person skilled in the technical field of this application. The terms used in the specification of this application are merely intended to describe specific embodiments but not to limit this application. The term "and/or" used herein is intended to include any and all combinations of one or more relevant items recited.

In addition, to the extent that no mutual conflict occurs, the technical features described below in different embodiments of this application may be combined with each other.

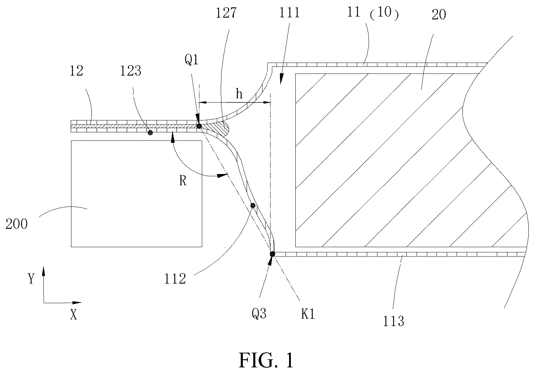

Referring to FIG. 1, which is a simplified cross-sectional view of a pouch-type lithium-ion battery in the prior art, a pouch-type lithium-ion battery includes a packaging bag 10 and a cell assembly 20 located inside the packaging bag 10. An aluminum laminated film of the packaging bag 10 is stamped to form an accommodation cavity 111. After the cell assembly 20 is placed in the accommodation cavity 111, the aluminum laminated film is folded and then heat-sealed. In this way, the packaging bag 10 of the pouch-type lithium-ion battery includes a main portion 11 and a top seal portion 12. When the cell assembly 20 is thermally runaway, a large amount of gas and heat is generated in a short time, causing the packaging bag 10 to bulge. If the gas inside the packaging bag 10 is not released in time, the pouch-type lithium-ion battery is eventually prone to explosion and fire. To release the gas inside the packaging bag 10 in time, existing pouch-type lithium-ion batteries typically use the top seal portion 12 as a pressure relief portion. The expanding gas can burst out from the top seal portion 12 to release pressure, thereby reducing the risk of explosion of the pouch-type lithium-ion battery.

However, as shown in FIG. 1, the applicant hereof finds that during the sealing of the top seal portion 12 of the lithium-ion battery, due to a high temperature of the heat-sealing head 200 (typically as high as 200 °C to 250 °C), a specified distance is maintained between the heat-sealing head 200 and the cell assembly 20 to reduce the impact of the heat radiated by the heat-sealing head 200 on the cell assembly 20. Consequently, the inclination of the first wall 123 on the top seal portion 12 and the second wall 112 of the main portion 11 is made relatively large after completion of sealing. Specifically, a straight line K1 is defined by an edge point Q1 close to the edge of the cell assembly 20 in the sealed region of the top seal portion 12 and a connection point Q3 close to the top seal portion 12 in the main portion 11. An angle R between the first wall 123 of the top seal portion 12 and the straight line K1 is a relatively large obtuse angle. For example, the angle R exceeds 135°. Consequently, the variable space in the accommodation cavity 111 of the main portion 11 is made relatively large when the cell assembly 20 is thermally runaway. According to the ideal gas law PV = NRT (where P is the gas pressure in Pa; V is the gas volume in m³; N is the number of moles of gas in mol; R is the ideal gas constant with a value of 8.314 J/(mol·K); and T is the absolute temperature of the gas in K). As can be seen, when temperature T increases, assuming that R remains constant, in the same electrochemical device 100 system, the number of moles (N) of gas produced at the same temperature is considered constant. The change in gas volume V directly affects the gas pressure P. Specifically, the greater the change in gas volume V, the smaller the change in gas pressure P. When the gas pressure P during thermal runaway is insufficient to burst open the top seal portion 12 to release pressure, the lithium-ion battery will eventually bulge or even explode.

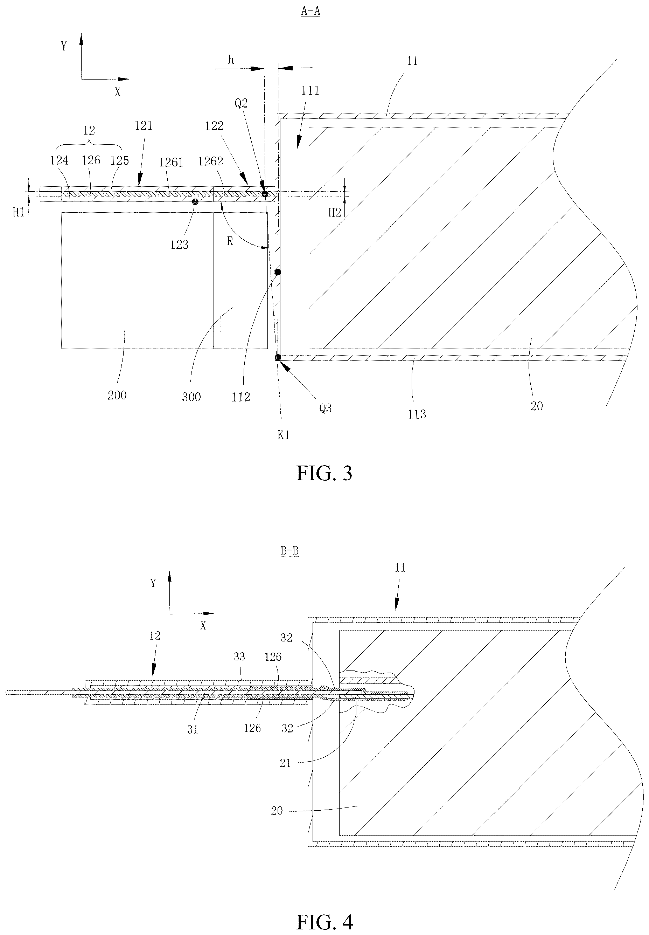

In view of the above problems, in the electrochemical device 100 in an embodiment of this application, the sealing technique of the packaging bag 10 is adjusted so that the structure between the main portion 11 and the top seal portion 12 is changed after completion of sealing, and so that the angle R between the first wall 123 and the straight line K1 is as close to a right angle as possible. In addition, the distance h between the edge point Q2 in the sealed region on the top seal portion 12 and the connection point Q3 close to the top seal portion 12 in the main portion 11 is controlled to fall within a specified range. In this way, on the one hand, the variable space of the accommodation cavity 111 in the main portion 11 can be reduced. Therefore, in the case of thermal runaway, the gas inside the accommodation cavity 111 generates a pressure P that is high enough to burst open the top seal portion 12 to release pressure. On the other hand, as shown in FIG. 1 and 3, the stress point Q1 on the top seal portion 12 shifts closer to the cell assembly 20 to form a force point Q3. Consequently, it is easier to burst the top seal portion 12 in the thickness direction Y to achieve safe pressure relief during thermal runaway.

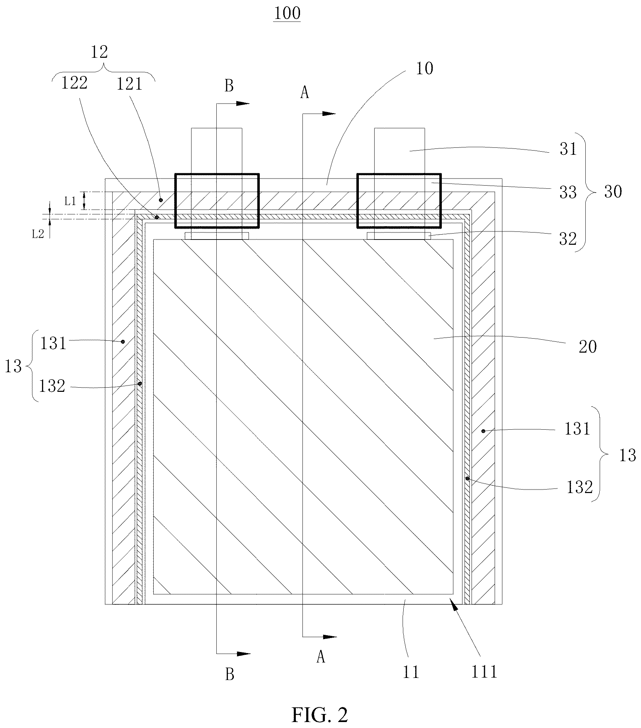

Referring to FIG. 2 and FIG. 3, in an embodiment of this application, an electrochemical device 100 includes a packaging bag 10, a cell assembly 20, and a tab assembly 30. The packaging bag 10 includes a main portion 11 and a top seal portion 12 connected in a first direction X. The main portion 11 is provided with an accommodation cavity 111. The first direction X is a direction in which the tab assembly 30 extends out of the packaging bag 10. The cell assembly 20 is disposed in the accommodation cavity 111. The tab assembly 30 is electrically connected to the cell assembly 20. A part of the tab assembly 30 is connected to the top seal portion 12. A part of the tab assembly 30 extends out of the accommodation cavity 111.

FIG. 3 is a schematic diagram from a viewing angle of a projection of an electrochemical device 100 sectioned along the thickness direction Y. The top seal portion 12 is provided with a sealed region. Along a direction from the top seal portion 12 toward the main portion 11, the sealed region includes an edge point Q2 close to the edge of the cell assembly and located on the first wall. The top seal portion 12 includes a first wall 123 extending along the first direction X. The main portion 11 includes a second wall 112 and a third wall 113 connected to each other. The second wall 112 is connected to the first wall 123 and the third wall 113. The third wall 113 extends along the first direction X. A connection point Q3 is formed at a junction between the second wall 112 and the third wall 113. A straight line K1 is defined by the edge point Q2 and the connection point Q3. An angle R between the first wall 123 and the straight line K1 satisfies: 80° ≤ R ≤ 110°; and/or, along the first direction X, a distance h between the edge point Q2 and the connection point Q3 satisfies: 0 mm ≤ h ≤ 1 mm.

With the connection point Q3, in contrast to the existing technology that uses only one heat-sealing head 200 to seal the top seal portion 12, the electrochemical device 100 in an embodiment of this application is prepared by adding an auxiliary backing block 300 to a side of the original sealing head 200, the side being close to the cell assembly 20. This auxiliary backing block 300 is disposed near the main portion 11 of the packaging bag 10. During sealing, the auxiliary backing block 300 abuts the first wall 123 and the second wall 112 separately to shape the first wall 123 and the second wall 112 so that the first wall 123 and the second wall 112 are connected as perpendicularly as possible. In addition, by controlling the distance between the edge point Q2 and the connection point Q3 in the first direction X to fall within the range of 0 mm to 1 mm, after completion of sealing, this application can reduce the variable space of the accommodation cavity 111 on the one hand, so that the gas inside the accommodation cavity 111 generates a relatively high pressure in the case of thermal runaway of the electrochemical device. On the other hand, when the original sealing head 200 seals the top seal portion 12, an overflowed adhesive lump 127 appears in an unsealed region (as shown in FIG. 1). The overflowed adhesive lump 127 locally stretches the top seal portion 12 open, resulting in an increase in the space of the accommodation cavity 111. At this time, the stress point Q1 of the top seal portion 12 is located between the sealed region and the overflowed adhesive lump 127. Under the abutment and press-fitting action of the auxiliary backing block 300, the overflowed adhesive lump 127 is pressed to bond an upper-side top seal portion and a lower-side top seal portion, thereby reducing the variable space of the accommodation cavity 111. The overflowed adhesive lump 127 is pressed so as to spread out along the first direction X. In this way, the stress point Q1 on the top seal portion 12 shifts closer to the cell assembly 20 to form a stress point Q2. During thermal runaway, the stress point Q2 is subjected to a greater force in the thickness direction Y of the top seal portion 12, and the top seal portion 12 is more easily burst open to achieve pressure relief.

In some embodiments, the angle R between the first wall 123 and the straight line K1 satisfies: 85° ≤ R ≤ 100°. As can be learned from the above analysis of a thermal runaway process, the closer the angle between the first wall 123 and the straight line K1 is to 90°, the closer the connection between the first wall 123 and the second wall 112 is to a perpendicular connection, the smaller the spatial variation of the accommodation cavity 111, and the easier it is burst open the top seal portion 12. In some embodiments, R may be 85°, 86°, 87°, 88°, 89°, 90°, 91°, 92°, 93°, 94°, 95°, 96°, 97°, 98°, 99°, 100°, or the like.

In some embodiments, along the first direction X, the distance h between the edge point Q2 and the connection point Q3 satisfies: 0.2 mm ≤ h ≤ 0.5 mm. The closer the distance h between edge point Q2 and the connection point Q3 is to 0, the flusher the edge point Q2 and the connection point Q3 are in the thickness direction Y. In this case, the second wall 112 of the main portion 11 extends along a direction more perpendicular to the first direction X, so that the first wall 123 and the second wall 112 are perpendicularly connected.

In some embodiments, along the first direction X, the sealed region includes a first sealed region 121 and a second sealed region 122, and the second sealed region 122 is located between the first sealed region 121 and the main portion 11. Along a direction from the top seal portion 12 toward the main portion 11, the first sealed region 121 and the second sealed region 122 are contiguous or spaced apart. In the second sealed region 122, an edge point Q2 is formed close to the edge of the cell assembly 20 and located on the first wall. When the electrochemical device 100 is in normal use, the second sealed region 122 increases the binding force of the top seal portion 12 in the thickness direction Y thereof, thereby improving the safety performance. Furthermore, the second sealed region 122 added helps maintain the spatial stability of the accommodation cavity 111, thereby reducing the probability that the space of the top seal portion 12 at the location of the original overflowed adhesive lump 127 is stretched open. When the electrochemical device 100 is thermally runaway, the gas in the accommodation cavity 111 expands, and the gas pressure increases. The stress point Q2 of the top seal portion 12 is located in the second sealed region 122. Furthermore, a peak stress point of the top seal portion 12 is located at the edge point Q2 of the second sealed region 122. With the rise of the temperature of thermal runaway, the sealing effect of the second sealed region 122 decreases, allowing the gas to burst open the second sealed region 122 and the first sealed region 121 in the thickness direction of the top seal portion 12 to release pressure.

In the above embodiment, an auxiliary backing block 300 may be added to a side of the original heat-sealing head 200, the side being close to the main portion 11, so to shape the first wall 123 and the second wall 112. Alternatively, an auxiliary heat-sealing head 300 may be added to a side of the original heat-sealing head 200, the side being close to the main portion 11. The auxiliary heat-sealing head 300 serves a heating function, thereby forming a second sealed region 122 on the top seal portion 12. To reduce the impact of the heat radiated by the auxiliary heat-sealing head 300 on the cell assembly 20 inside the main portion 11, the temperature of the auxiliary heat-sealing head 300 may be lower than the temperature of the original heat-sealing head 200.

In some embodiments, referring to FIG. 3, the top seal portion 12 includes a first layer 124, a second layer 125, and an adhesive layer 126 located between the first layer 124 and the second layer 125. The adhesive layer 126 includes a first part 1261 and a second part 1262. The first part 1261 is located in the first sealed region 121. The second part 1262 is located in the second sealed region 122. Along the thickness direction Y of the top seal portion 12, the thickness H1 of the first part 1261 and the thickness H2 of the second part 1262 satisfy: 0.8 ≤ H1/H2 ≤ 1.2.

In the prior art, when the first sealed region 121 is subjected to pressure-assisted heat sealing using the original heat-sealing head 200, a part of the adhesive layer 126 overflows at a corresponding position in the second sealed region 122 of this application, thereby forming an overflowed adhesive lump 127 (as shown in FIG. 1 and FIG. 3). Because no further pressure is applied to the overflowed adhesive lump 127, the thickness of the overflowed adhesive lump 127 in the thickness direction Y of the top seal portion 12 is much greater than the thickness of the adhesive layer 126 in the first sealed region 121. This results in a larger spacing between the first layer 124 and the second layer 125 in an unsealed region close to the main portion 11, where the unsealed region is the second sealed region 122 of this application. Consequently, the angle between the first wall 123 of the top seal portion 12 and the second wall 112 of the main portion 11 can hardly be close to a right angle, thereby failing to meet the requirement of rapid pressure relief in the case of thermal runaway.

In an embodiment of this application, the adhesive layer 126 in the second sealed region 122 is subjected to pressure-assisted heat sealing by means of an auxiliary backing block 300 or an auxiliary heat-sealing head 300 additionally provided, thereby reducing the thickness of the overflowed adhesive lump 127 and making the thickness of the adhesive layer 126 more uniform. As a result, the angle between the first wall 123 of the top seal portion 12 and the second wall 112 of the main portion 11 made close to a right angle. In this way, the tensile sealing force of the second sealed region 122 in the thickness direction Y of the top seal portion 12 is increased when the electrochemical device 100 operates within the normal operating temperature range, thereby increasing the structural strength and sealing performance of the top seal portion 12. When the electrochemical device 100 is thermally runaway, the stress of the second sealed region 122 in the thickness direction Y of the top seal portion 12 increases. Under high-temperature conditions (125 °C to 135 °C), the adhesive layer 126 melts, and the high-temperature and high-pressure gas in the accommodation cavity 111 separates the first layer 124 from the second layer 125 in the thickness direction Y of the top seal portion 12, and rushes out of the accommodation cavity 111 to release pressure.

In a further example, along the thickness direction Y of the top seal portion 12, the thickness H1 of the first part 1261 and the thickness H2 of the second part 1262 of the adhesive layer 126 are equal or nearly equal, that is, the ratio between the two thicknesses is 1 or close to 1.

In some embodiments, at an edge point Q2 close to the edge of the cell assembly 20 in the second sealed region 122 and located on the first wall, a tensile sealing force F1 at a normal temperature of 22 °C to 27 °C ranges from 3 N/mm to 10 N/mm, thereby improving the structural strength and sealing performance of the top seal portion 12; and a tensile sealing force F2 at a high temperature of 125 °C to 135 °C ranges from 0.01 N/mm to 0.3 N/mm. In the case of thermal runaway, the adhesive layer 126 melts, making it easy for the gas to separate the first layer 124 from the second layer 125 in the thickness direction Y of the top seal portion 12 and to rush out of the accommodation cavity 111 to achieve pressure relief.

In some embodiments, referring to FIG. 2, along a direction from the main portion 11 toward the top seal portion 12, the length L1 of the first sealed region 121 ranges from 1 mm to 2.5 mm; and/or, along a direction from the main portion 11 toward the top seal portion 12, the length L2 of the second sealed region 122 ranges from 0.01 mm to 0.5 mm. In an embodiment of this application, the sealing effect of the top seal portion 12 is mainly ensured by the first sealed region 121. The main function of the second sealed region 122 is to shape the first wall 123 and the second wall 112 and to shift the stress point Q2 of the top seal portion 12 closer to the cell assembly 20. This configuration reduces the space of the accommodation cavity 111 and increases the stress at the stress point Q2 during thermal runaway, thereby making it easier for the gas to burst the first sealed region 121 and the second sealed region 122 to release pressure. Therefore, the sealing length L1 of the first sealed region 121 needs to be greater than the sealing length L2 of the second sealed region 122, and the sealing length L2 of the second sealed region 122 needs to avoid being excessive.

In some embodiments, as shown in FIG. 2, the tab assembly 30 includes a tab 31, an insulator 32, and a sealing element 33. One end of the tab 31 is electrically connected to the cell assembly 20, and the other end of the tab 31 extends out of the accommodation cavity 111 from the top seal portion 12 of the packaging bag 10. The insulator 32 covers a connection region between the tab 31 and the cell assembly 20 to cover the burrs on the connection region, thereby reducing the probability that the burrs pierce the cell assembly 20 and causes a short circuit of the cell assembly 20. The sealing element 33 is disposed between the tab 31 and the top seal portion 12, and the sealing element 33 wraps a part of the tab 31, thereby improving the hermeticity of the tab 31 at the top seal portion 12.

In some embodiments, a method for electrically connecting the tab 31 to the cell assembly 20 includes, but is not limited to, welding the tab 31 to an electrode plate 21 of the cell assembly 20, or forming a protruding tab 31 by cutting the electrode plate 21, or the like.

In some embodiments, referring to FIG. 4, along a direction from the main portion 11 toward the top seal portion 12, the insulator 32 and the adhesive layer 126 are spaced apart. When the insulator 32 can cover the connection region between the tab 31 and the cell assembly 20, the structure in which the insulator 32 and the adhesive layer 126 are spaced apart can, first, reduce the length of the insulator 32 and reduce the production cost, and second, reduce the impact of heat on the shape of the insulator 32 during the pressure-assisted heating of the adhesive layer 126, and reduce the risk of deformation and shrinkage of the insulator 32, and third, make the material selection for the adhesive layer 126 independent of the material selection for the insulator 32, thereby widening the range of materials available for the adhesive layer and the insulator.

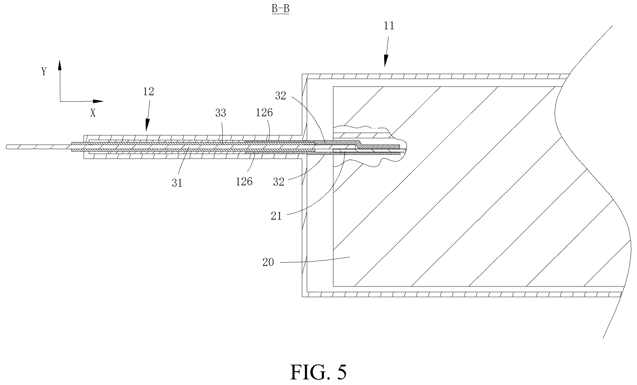

In some embodiments, referring to FIG. 5, along the direction from the main portion 11 toward the top seal portion 12, the insulator 32 and the adhesive layer 126 are fused into a single integral piece. During the production of the electrochemical device 100, the insulator 32 is first disposed in the connection region between the tab 31 and the cell assembly 20, and then the cell assembly 20 is placed into the accommodation cavity 111. Subsequently, the top seal portion 12 of the packaging bag 10 is heat-sealed. Keeping a gap between the insulator 32 and the adhesive layer 126 is crucial, especially in a small-sized electrochemical device 100 in which a high sealing precision is required. Therefore, in an embodiment of this application, by appropriately increasing the length of the insulator 32, the insulator 32 is caused to contact or partially overlap the adhesive layer 126. During pressure-assisted heat sealing, the insulator 32 and the adhesive layer 126 are fused into a single integral piece. In this embodiment, the material of the insulator 32 is correlated with the material of the adhesive layer 126 in that the melting points thereof are close or identical, allowing the insulator and the adhesive layer to melt together to form a single integral piece. With the structure in which the insulator 32 and the adhesive layer 126 are fused into a single integral piece, on the one hand, the requirements on the sealing precision are lowered, and the production efficiency is improved. On the other hand, after completion of sealing, the adhesive layer 126 exerts a tensile force on the insulator 32, thereby reducing the risk of internal short circuits in the cell assembly 20 due to shrinkage of the insulator 32. This structure also reduces the wobbling amplitude of the cell assembly 20 within the accommodation cavity 111, and improves the internal stability of the electrochemical device 100.

In some embodiments, a melting point M1 of the insulator 32 satisfies: 150 °C ≤ M1 ≤ 270 °C, and a melting point M2 of the adhesive layer 126 satisfies: 50 °C ≤ M2 ≤ 400 °C. By setting the melting points of the insulator 32 and the adhesive layer 126 to fall within the above ranges, this application enables the insulator 32 and the adhesive layer 126 to fuse into a single integral structure during heat sealing on the one hand. On the other hand, this setting makes both the insulator 32 and the adhesive layer 126 resistant to high temperature to some extent after completion of sealing, thereby ensuring stability of the electrochemical device 100 under normal operating conditions. In a further embodiment, the melting point M1 of the insulator 32 satisfies: 150 °C ≤ M1 ≤ 220 °C, and the melting point M2 of the adhesive layer 126 satisfies: 50 °C ≤ M2 ≤ 160 °C.

In some embodiments, referring to FIG. 2, the packaging bag 10 further includes a side seal portion 13. The side seal portion 13 is connected to the main portion 11. The side seal portion 13 is provided with a third sealed region 131 and a fourth sealed region 132. The fourth sealed region 132 is located between the third sealed region 131 and the main portion 11. By adding a fourth sealed region 132 between the third sealed region 131 and the main portion 11, this application further increases the sealing area of the side seal portion 13, and makes the sealed region on the side seal portion 13 closer to the main portion 11, thereby reducing the variable space of the accommodation cavity 111, increasing the gas pressure inside the accommodation cavity in the case of thermal runaway, and making it easier to burst open the top seal portion to release pressure.

As can be learned from the ideal gas law PV = NRT, assuming the number of moles N of the gas and the ideal gas constant R remain constant, when thermal runaway occurs inside the electrochemical device 100, the temperature T rises. In this case, if the space V of the accommodation cavity 111 remains constant or changes slightly, the gas pressure P increases significantly, thereby making it convenient for the high-temperature high-pressure gas to burst the top seal portion 12 of the packaging bag 10 to release pressure. Understandably, a fourth sealed region 132 may be added to the side seal portion 13 on a single side of the packaging bag 10, or a fourth sealed region 132 may be added to the side seal portions 13 on both sides of the packaging bag 10, thereby further reducing the variable space of the accommodation cavity 111.

This application further provides an embodiment of an electronic device. The electronic device includes an electrochemical device 100. The structure and functionality of the electrochemical device 100 may be learned by referring to any one of the above embodiments, the details of which are omitted here.

In an embodiment of this application, the electrochemical device 100 includes a packaging bag 10, a cell assembly 20, and a tab assembly 30. The packaging bag 10 includes a main portion 11 and a top seal portion 12 connected to each other. The main portion 11 is provided with an accommodation cavity 111. The cell assembly 20 is disposed in the accommodation cavity 111. The tab assembly 30 is electrically connected to the cell assembly 20. The tab assembly 30 is connected to the top seal portion 12.

The top seal portion 12 is provided with a sealed region. Along a direction from the top seal portion 12 toward the main portion 11, the sealed region includes an edge point Q2 close to the edge of the cell assembly and located on the first wall. The top seal portion 12 includes a first wall 123 extending along the first direction X. The main portion 11 includes a second wall 112 and a third wall 113 connected to each other. The second wall 112 is connected to the first wall 123 and the third wall 113. The third wall 113 extends along the first direction X. A connection point Q3 is formed at a junction between the second wall 112 and the third wall 113. A straight line K1 is defined by the edge point Q2 and the connection point Q3. An angle R between the first wall 123 and the straight line K1 satisfies: 80° ≤ R ≤ 110°; and/or, along the first direction X, a distance h between the edge point Q2 and the connection point Q3 satisfies: 0 mm ≤ h ≤ 1 mm.

In the electrochemical device 100 of this application, the angle R between the first wall 123 and the straight line K1 is controlled to satisfy: 80° ≤ R ≤ 110°; and/or, along the first direction X, the distance h between the edge point Q2 and the connection point Q3 is controlled to satisfy: 0 mm ≤ h ≤ 1 mm. This configuration causes the first wall 123 to be connected to the second wall 112 as perpendicularly as possible, reduces the variable space of the accommodation cavity 111, and makes the stress point Q2 on the top seal portion 12 closer to a junction corner between the first wall 123 and the second wall 112. When the electrochemical device 100 operates under normal conditions, the above configuration increases the binding force of the top seal portion 12 in the thickness direction Y, thereby improving the safety performance. During thermal runaway, the stress point Q2 is subjected to a greater force in the thickness direction Y of the top seal portion 12, making it easier to burst open the top seal portion 12 to achieve pressure relief.

Described above are merely some embodiments of this application without limiting the patent scope of this application. Any and or all equivalent structural variations and equivalent process variations made by using the content of the specification and the drawings of this application, and the content hereof used directly or indirectly in any other related technical fields, still fall within the patent protection scope of this application.

## Claims

1. An electrochemical device (100), wherein, the electrochemical device (100) comprises:
a packaging bag (10), comprising a main portion (11) and a top seal portion (12) connected in a first direction, wherein the main portion (11) is provided with an accommodation cavity (111);
a cell assembly (20) and a tab assembly (30), wherein the cell assembly (20) is disposed in the accommodation cavity (111), the tab assembly (30) is electrically connected to the cell assembly (20), and the tab assembly (30) is connected to the top seal portion (12);
the top seal portion (12) is provided with a sealed region and a first wall (123) extending along a first direction; along a direction from the top seal portion (12) toward the main portion (11), the sealed region comprises an edge point closest to an edge of the cell assembly (20) and located on the first wall (123);
the main portion (11) comprises a second wall (112) and a third wall (113) connected to each other, the second wall (112) is connected to the first wall (123) and the third wall (113), the third wall (113) extends along the first direction, a connection point is formed at a junction between the second wall (112) and the third wall (113), and a straight line is formed by passing through the edge point and the connection point;
an angle R between the first wall (123) and the straight line satisfies: 80° ≤ R ≤ 110°, and/or
along the first direction, a distance h between the edge point and the connection point satisfies: 0 mm ≤ h ≤ 1 mm.

2. The electrochemical device (100) according to claim 1, wherein,
the angle R satisfies: 85° ≤ R ≤ 100°; and/or the distance h satisfies: 0.2 mm ≤ h ≤ 0.5 mm.

3. The electrochemical device (100) according to claim 1 or 2, wherein,
the sealed region comprises a first sealed region (121) and a second sealed region (122); the second sealed region (122) is located between the first sealed region (121) and the main portion (11); along the first direction, the first sealed region (121) and the second sealed region (122) are contiguous or spaced apart; and the second sealed region (122) comprises the edge point closest to the edge of the cell assembly (20) and located on the first wall (123).

4. The electrochemical device (100) according to claim 3, wherein,
along a thickness direction of the top seal portion (12), the top seal portion (12) comprises a first layer (124), a second layer (125), and an adhesive layer (126) located between the first layer (124) and the second layer (125); the adhesive layer (126) comprises a first part (1261) and a second part (1262); the first part (1261) is located in the first sealed region (121), and the second part (1262) is located in the second sealed region (122); and
along the thickness direction of the top seal portion (12), a thickness H1 of the first part (1261) and a thickness H2 of the second part (1262) satisfy: 0.8 ≤ H1/H2 ≤ 1.2.

5. The electrochemical device (100) according to claim 4, wherein,
at the edge point closest to the cell assembly (20) in the second sealed region (122), a tensile sealing force F1 at a normal temperature of 22 °C to 27 °C ranges from 3 N/mm to 10 N/mm, and a tensile sealing force F2 at a high temperature of 125 °C to 135 °C ranges from 0.01 N/mm to 0.3 N/mm.

6. The electrochemical device (100) according to any one of claims 1 to 5, wherein,
the tab assembly (30) comprises a tab (31), an insulator (32), and a sealing element (33); the tab (31) is electrically connected to the cell assembly (20); the insulator (32) covers a connection region between the tab (31) and the cell assembly (20); and the sealing element (33) is disposed between the tab (31) and the top seal portion (12).

7. The electrochemical device (100) according to claim 6, wherein,
along a direction from the main portion (11) toward the top seal portion (12), the insulator (32) and the adhesive layer (126) are spaced apart; or
along the direction from the main portion (11) toward the top seal portion (12), the insulator (32) and the adhesive layer (126) are fused into a single integral piece.

8. The electrochemical device (100) according to claim 7, wherein,
a melting point M1 of the insulator (32) satisfies: 150 °C ≤ M1 ≤ 270 °C, and a melting point M2 of the adhesive layer (126) satisfies: 50 °C ≤ M2 ≤ 400 °C.

9. The electrochemical device (100) according to claim 8, wherein,
the melting point M1 of the insulator (32) satisfies: 150 °C ≤ M1 ≤ 220 °C, and the melting point M2 of the adhesive layer (126) satisfies: 50 °C ≤ M2 ≤ 160 °C.

10. The electrochemical device (100) according to any one of claims 1 to 9, wherein,
the packaging bag (10) further comprises a side seal portion (13), and the side seal portion (13) is connected to the main portion (11); and
the side seal portion (13) is provided with a third sealed region (131) and a fourth sealed region (132), and the fourth sealed region (132) is located between the third sealed region (131) and the main portion (11).

11. The electrochemical device (100) according to any one of claims 1 to 10, wherein,
along a direction from the main portion (11) toward the top seal portion (12), a length of the first sealed region (121) ranges from 1 mm to 2.5 mm; and/or
along a direction from the main portion (11) toward the top seal portion (12), a length of the second sealed region (122) ranges from 0.01 mm to 0.5 mm.

12. An electronic device, wherein, the electronic device comprises the electrochemical device (100) according to any one of claims 1 to 11.
